# EUROPEAN PATENT SPECIFICATION

(11) **EP 2 821 448 B1**
(45) Date of publication and mention of the grant of the patent: **08.11.2017**
(21) Application number: 13181770.2
(22) Date of filing: 27.08.2013
(51) Int. Cl.: C09D 11/106

(54) **Publication gravure inks**
Publikationstiefdrucktinten
Encres de gravures dans des publications

(30) Priority: 03.07.2013 IN 1983DE2013
(43) Date of publication of application: 07.01.2015
(73) Proprietor: Siegwerk Druckfarben AG & Co. KGaA, 53721 Siegburg (DE)
(72) Inventor: Kharwar, Suresh Prasad, 110001 State-Delhi (IN); Mohapatra, Neelakamal, 301019 Rajasthan (IN); Ruspic, Christian, 53721 Siegburg (DE); Leineweber, Ralf, 53721 Siegburg (DE)
(74) Representative: Hepp Wenger Ryffel AG

(56) References cited:
- EP-A1- 0 322 188
- EP-A1- 0 395 279
- EP-A2- 0 349 319
- EP-A2- 0 814 136
- US-A- 4 973 670
- US-A- 5 098 479

## Description

The present invention is related to a publication gravure ink comprising a binder system having improved characteristics.

Publication gravure printing is used in the manufacturing of coloured press articles which are to be produced in high volumes, such as paper supplements (advertising etc.), magazines or catalogues. Since for those purposes a high amount of ink is required, the publication gravure inks have to be as cost-efficient as possible. The components used in the ink have to be compatible with each other and have to be soluble in the used solvent, which is preferably toluene. On the other hand, the inks have to meet quality requirements such as good blocking behaviour, scratch resistance, and good optical properties. Moreover, the inks have to possess the required viscosity and dilutability as well as good drying properties. On the one hand, in light of the high ink volumes which are needed, the publication gravure inks are stored in large tanks and pumped to the printing machines. This requires a low-viscosity ink.

There is still a need for a publication gravure ink which meets all the above requirements in a satisfactory and cost-efficient manner.

In the state of the art, metal rosin resinates, such as zinc, magnesium or calcium rosin resinates, have been suggested as binder component for publication gravure inks. While metal rosin resinates provide the inks with a variety of the required characteristics, the resulting inks have a very low dilutation rates. Accordingly, in order to increase the dilutability of those publication gravure inks, suitable co-resins have been incorporated into the inks. For example, cellulose derivatives such as ethyl cellulose have been used. However, those compounds are very expensive and do not provide the inks with all necessary characteristics.

Furthermore, gum rosin based resins, in particular phenolic-modified rosin resin esters, have been used in publication gravure inks as additional binder component in combination with resinates, in order to obtain the desired characteristics of the composition. However, due to an increased demand in recent years a shortage of availability of those resins has arisen, temporarily resulting in a dramatic price increase.

There have been suggestions to add amine-containing polymers to publication gravure inks on the basis of metal rosin resinates.

For example, in EP-0 395 279 A1, a high-molecular weight pendent tertiary amine polymer has been suggested to increase the dilutability of a resinous binder based on metal rosin resinate. In said reference, it is compulsory that the metal rosin resinate constitutes the majority proportion of the binder of the ink. The tertiary amine containing polymer only has to be added in little amounts, such as 3 wt.-% of the total weight of the binder.

In US-5,098,479, other specific aminoacrylate resins where suggested as suitable additives to binders of publication gravure inks. However, those binders have to compulsorily include zinc metal resinates, significantly limiting the scope of application of those polymers.

It was the object of the present invention to provide a composition for the publication gravure ink process which does not suffer from the drawbacks of the above discussed prior art, in particular to provide a composition for the publication gravure ink process having desired dilutability properties in combination with satisfactory ink properties, and which is more cost-efficient than inks known from the art.

According to the present invention, the above object has been solved by a composition as defined in claim 1. In particular, the present invention is related to a composition for the publication gravure printing, comprising toluene as organic solvent and as one binder component a copolymer which is the reaction product of 95-50 wt.-% styrene or α-methyl styrene, 5-20 wt.-% of a monomer selected from the group consisting of a tertiary-amine containing (meth)acrylate and acrylic acid, and 0.5-40 wt.-% of a compound comprising at least 2 ethylenic unsaturated moieties, preferably a poly(meth)acrylate, more preferably a di(meth)acrylate, wherein the sum of all indicated percentages is 100%.

According to the present invention, the term (meth)acrylate comprises both the respective acrylate and methacrylate compound.

According to the present invention, all percentages of components are to be understood such that the sum of all indicated percentages is 100%.

According to the present invention, it has been found that the specific copolymer described herein meets all the above discussed criteria, such as solubility in toluene and compatibility with other resins present in the composition, and provides any kind of publication gravure ink with the necessary characteristics. The specific copolymer is characterized by the presence of styrene or α-methyl styrene, a monomer selected from the group consisting of a tertiary-amine containing (meth)acrylate and acrylic acid, and a monomer which is capable of crosslinking, i.e. a monomer which comprises at least 2 ethylenic unsaturated moieties.

According to a preferred embodiment, said copolymer is the reaction product of styrene, 2-(dimethylamino)ethylmethacrylate (DMAEMA), and a compound selected from the group consisting of hexanediol diacrylate (HDDA), divinylbenzene (DVB), dipropyleneglycol diacrylate (DPDA) and tripropyleneglycol diacrylate (TPDA). According to a particularly preferred embodiment, said copolymer is the reaction product of styrene, 2-(dimethylamino)-ethylmethacrylate, and hexanediol diacrylate.

According to another preferred embodiment, said copolymer is the reaction product of styrene, acrylic acid, and a compound selected from the group consisting of hexanediol diacrylate (HDDA), divinylbenzene (DVB), dipropyleneglycol diacrylate (DPDA) and tripropyleneglycol diacrylate (TPDA). According to a particularly preferred embodiment, said copolymer is the reaction product of styrene, acrylic acid, and hexanediol diacrylate.

The copolymer is made from a reaction mixture comprising 95-50 wt.-%, more preferably 95-70 wt.-% styrene or α-methyl styrene, 0.5-40 wt.-%, more preferably 0.5-20 wt.-% of the monomer which comprises at least 2 ethylenic unsaturated moieties, and 5-20 wt.-%, more preferably 5-10 wt.-% of the tertiary-amine containing (meth)acrylate, or of acrylic acid.

According to an especially preferred embodiment of the present invention, said copolymer is the reaction product of 85-90 wt.-% styrene, 12-8 wt.-% 2-(dimethylamino)ethylmethacrylate, and 2-3 wt.-% hexanediol diacrylate.

According to another especially preferred embodiment of the present invention, said copolymer is the reaction product of 90-94 wt.-% styrene, 5-8 wt.-% acrylic acid, and 1-2 wt.-% hexanediol diacrylate.

It has been found that the copolymer to be used in the present invention can be manufactured in a very simple and cost-efficient way by a solution polymerisation. The dilution and solution behaviour of the copolymers of the present invention can be favourably adjusted by the use and amount of crosslinking monomer. The copolymer to be used in the present invention exhibits a very good compatibility with the metal rosin resinates and with other rosin reins, so that the copolymer can be advantageously used in combination with those polymers (e.g. with a resinate resin in the grinding part of a gravure publication ink).

The monomers for preparing the copolymers of the present invention are known in the art and either commercially available or can be prepared by standard methods of organic chemistry.

According to the present invention, said copolymer preferably has a weight average molecular weight of 50.000 to 100.000 Dalton, more preferably 60.000 to 90.000 Dalton and most preferably 70.000 to 85.000 Dalton. The molecular weight is determined by GPC (gel permeation chromatography) using polystyrene as standard.

The copolymers to be used in the present invention can be prepared by methods known in the art for making copolymers from ethylenically unsaturated monomers. Basically, the monomers can be reacted with each other in the presence of a radical initiator in an organic solvent (solution polymerisation) or in water in the presence of surfactants (emulsion polymerisation).

According to the present invention, a solution polymerisation is preferred. Described herein is a process for preparing a copolymer as described above, comprising the steps of providing a mixture comprising a solvent and a radical initiator, adding a mixture of monomers comprising styrene or α-methyl styrene, a monomer selected from the group consisting of a tertiary-amine containing (meth)acrylate and acrylic acid, and a compound comprising at least 2 ethylenic unsaturated moieties, preferably a poly(meth)acrylate, more preferably a di(meth)acrylate, to said mixture, and heating the thus obtained reaction mixture), preferably to a temperature in the range of 50-100°C, for 5 to 24 h, preferably, 6 to 10 h, depending on the percentage of residual monomers.

Any suitable organic solvent which is capable of dissolving the reactants can be used in said process. According to the present invention, the solvent is preferably toluene.

Any radical initiator conventionally used in radical polymerisation processes which does not react with the amine component can be used. Preferably, the radical initiator is azoisobutyronitrile (AIBN) or dibenzoylperoxide. The radical initiator is used in the process of the invention in amounts typical for said kind of reactions, for example in an amount of 0.1-5 wt.-%, based on the entire weight of the reaction mixture.

According to one embodiment, the radical initiator is provided in a suitable organic solvent, preferably toluene, and the resulting mixture is heated, preferably to a temperature in the range of 50-100°C, more preferably 60-90°C. At said temperature, a mixture comprising the above described monomers is added slowly, preferably drop wise via a dropping funnel, under stirring to the mixture of said radical initiator and solvent.

The mixture comprising the above described monomers is preferably a mixture of said monomers in a suitable organic solvent, preferably toluene.

After complete addition of said mixture comprising the above described monomers, the resulting mixture is further heated, preferably to a temperature in the range of 50-100°C, for 5 to 24 h, preferably, 6 to 10 h, depending on the percentage of residual monomers.

Once the desired copolymer has been formed, as controlled by using standard methods such as gas chromatography methods for determining the amount of unreacted functional groups, the mixture is cooled to room temperature. Depending on the molecular weight of the formed copolymer, the mixture may become highly viscous at a certain point in time. In that case, it may be favourable or necessary to add an additional amount of solvent, preferably toluene, to the reaction mixture.

During cooling, it may be favourable or necessary to add additives (stabilizers) for preventing gelling of the product. Such additives are known in the art. For example, hydroqui-nonemonomethylether (HQMME), phenothiazine, triphenylphosphite, 4-t-butyl catechol, or a mixture thereof may be used.

In contrast to the structurally different amine-containing polymers from the above discussed prior art, the present copolymers can be used without any restrictions in publication gravure inks, partly or preferably completely replacing conventional phenolic-modified rosin resin esters as binder component. In particular, according to a preferred embodiment of the present invention, said copolymers are the predominant binder component of a publication gravure ink, i.e. the major proportion of the binder of the publication gravure inks of the present invention is the copolymer of the present invention, and only a minor proportion of the binder of the publication gravure inks of the present invention is another binder such as a resinate.

The composition of the present invention, comprises, in addition to the above described copolymer, another binder. Preferably, this other binder is a resinate.

Metal rosin resinates and their preparations are known in the art. According to the present invention, any metal rosin resinate conventionally in publication gravure inks can be employed. For example, zinc, magnesium and calcium resinates of rosin resins such as wood rosin, gum rosin, tall oil rosin, polymerized or dimerized derivatives of those rosins, or modified derivatives of those rosins, such as formaldehyde-modified rosins, phenolic-modified rosin resin esters, hydrocarbon-modified rosins, maleic-modified rosins, or fumaric-modified rosins, or mixtures thereof, can be used. Examples of manufacturing methods of metal rosin resinates are described, for example, in US-4,198,329, US-4,528,036, and US-4,552,592.

The binders, i.e. the combination of the above described copolymer and the additional binder, typically makes up 10-50 wt.-%, preferably 15-25 wt.-%, of the composition of the varnish, i.e. the composition of the present invention without colorant. According to a preferred embodiment, the above described copolymer is the predominant binder component and thus makes up more than 50 wt.-%, preferably 30-80 wt.-%, more preferably 51-60 wt.-%, of the total binder weight.

The composition of the present invention additionally comprises a solvent, namely toluene. The amount of solvent of the composition of the varnish, i.e. the composition of the present invention without colorant, is typically in the range of from 40-80 wt.-%, preferably 50-70 wt.-%.

If desired, a minor amount of a cellulose derivative such as ethyl cellulose can be present in the composition of the present invention. Preferably, the amount of cellulose derivative of the composition of the varnish, i.e. the composition of the present invention without colorant, is in a range of from 0.1-5 wt.-%, more preferably 0.1-2 wt.-%.

The composition of the present invention may additionally comprise conventional additives for publication gravure printing inks, such as fillers, waxes, anti-separation additives such as bentonite, or anti-foaming agents.

Typical fillers for publication gravure printing inks are calcium carbonate, magnesium carbonate or china clay, or mixtures thereof. Preferably, the fillers are added in form of a varnish to the ink composition. Such varnishes are known in the art. For example, the varnish may be a combination of a binder, such as a resinate, and a solvent, such as toluene. The content of filler in the varnish may be in the range of 30 to 60 wt-%, of the total weight of the filler varnish. Preferably, the amount of filler varnish of the composition of the varnish, i.e. the composition of the present invention without colorant, is in a range of from 1-15 wt.-%, more preferably 5-10 wt.-%.

Typical waxes for publication gravure printing inks are polyethylene or paraffin waxes. Preferably, the waxes are added in form of a varnish to the ink composition. Preferably, the amount of waxes of the composition of the varnish, i.e. the composition of the present invention without colorant, is in a range of from 0.1-3 wt.-%, more preferably 0.1-2 wt.-%.

Other additives such as anti-foaming agents may be present in the composition of the varnish, i.e. the composition of the present invention without colorant, in a range of from 0.01-5 wt.-%.

The above described varnish can be obtained by mixing all ingredients with each other under agitation and optionally slightly heating.

The above described varnish can be mixed with any colorant conventionally used in the publication gravure printing process. According to the present invention, the term colorant comprises pigments and dyes. Dyes are soluble in the ink medium, whereas pigments are not. According to the present invention, preferably pigments are used as colorants. Typical pigments for publication gravure printing inks are, for example, carbon black, iron blue, calcium lithol reds, azo yellows, and phthalocyanines.

According to a preferred embodiment of the present invention, a pigment is dispersed in a low-viscous resin conventionally used in the art for that purpose. Exemplary low-viscous resins are resinates used in the above described varnish. Pre-dispersion of the pigment in said resin is achieved by agitation, e.g. stirring. The dispersed pigments are subsequently comminuted (i.e. ground) to a desired particle size using a standard equipment such as a ball mill. The thus obtained dispersed pigments are also referred to as "ink base."

In order to obtain the final ink composition of the present invention, the above described varnish and ink base (or the isolated colorants) are mixed with each other under stirring and optionally heating. If necessary or desired, the mixture can be diluted with additional solvent, preferably toluene.

Typically, the ink composition of the present invention comprises 10-95 wt.-%, preferably 20-90 wt.-%, of the above described varnish and 90-5 wt.-%, preferably 80-10 wt.-%, of the above described ink base or colorant.

The present invention is also related to the use of a copolymer described above as a binder component in a publication gravure printing ink. As described above, the copolymer of the present invention provides the resulting ink composition in a cost-efficient way with the required properties such as, for example, very good viscosity and dilutability characteristics, good blocking and scratch resistance, and good optical characteristics such as gloss.

The present invention is also related to a process of printing a product in a publication gravure printing process, comprising the step of printing at least a part of the surface of a substrate with a composition as described above. Substrates typically used in publication gravure printing, such as paper, as known to the skilled man and need not be discussed in detail here.

The present invention will now be discussed in more detail with reference to non-limiting examples.

### Example 1: Preparation of copolymer

15.48 g AIBN (Azoisobutyronitrile) was dissolved in 516 g Toluene under stirring in inert gas atmosphere (N₂). The thus obtained solution was heated to 70°C, and a mixture of 397.0 g styrene, 9.3 g HDDA (1,6-hexanediol diacrylate), and 46.5 g DMAEMA (dimethylaminoethyl methyacrylate) was added dropwise within a period of 80 min. The reaction mixture was held at 70°C until completion of the reaction, e.g. for about 7 hours. During said period, additional portions of AIBN (total additional amount: 5.11 g) were added. After said period of 7 h, 130 ml toluene were added in order to decrease the viscosity of the mixture, and the mixture was cooled to room temperature. During cooling, a mixture comprising 0.025% HQMME (hydroquinone monomethylether), 0.025% phenothiazine and 0.1% triphenyl phosphate was added in order to prevent gelling of the mixture.

The resulting copolymer had a theoretical solids content of 45.6%, and a degree of polymerisation of more than 99.5%, according to GC-Head-Space analysis. The dilution ratio (measured with a GS 3 cup, 3 mm orifice, 30 s) was 190%.

### Example 2: Preparation of varnish

The following components were combined in form of respective varnishes with each other under stirring:

| **Component** | **Amount (kg)** |
|---|---|
| Resinate (Erkazit 4400, Lawter) | 7.176 |
| Copolymer of example 1 | 13.65 |
| Toluene | 68.995 |
| Ethyl cellulose (Grade 300) | 0,516 |
| Calcium carbonate | 6,999 |
| Magnesium oxide | 0,034 |
| Bentonite | 1.84 |
| Micronised PE-Wax (< 20 µm) | 0,8 |
| Anti-foaming agent | 0,024 |

### Comparative example 1

The same varnish as described in example 2 was prepared with the exception that instead of the copolymer of example 1 a a phenolic-modified rosin resin ester (Unik print 3342, United resins) was used.

### Example 3: Preparation of copolymer

A reactor was supplied with 477.8 g toluene and heated to 85°C. 12.6 g dibenzoylperoxide and 10 g Toluene were added under stirring in inert gas atmosphere (N₂). The thus obtained solution was kept at 85°C, and a mixture of 401.6 g styrene, 4.1 g HDDA (1,6-hexanediol diacrylate), and 21.9 g acrylic acid was added dropwise within a period of about 30 min. The reaction mixture was held at 85°C until completion of the reaction, e.g. for about 12 hours. During said period, additional portions of dibenzoylperoxide (total additional amount: 3.7 g) were added. After said period of about 12 h, the mixture was cooled to room temperature. During cooling, a mixture comprising 0.025 wt.-% phenothiazine, 0.01 wt.-% t-butyl catechol, 0.025 wt.-% hydroquinone monomethylether, and 0.1 wt.-% triphenyl phosphate (the weight percentages being in relation to the weight of the entire reaction mixture) was added in order to prevent gelling of the mixture.

The resulting copolymer had a theoretical solids content of 42.8%, and a degree of polymerisation of more than 99.5%, according to GC-Head-Space analysis. The dilution ratio (measured with a GS 3 cup, 3 mm orifice, 30 s) was 350%.

### Example 4: Preparation of varnish

The following components were combined in form of respective varnishes with each other under stirring:

| **Component** | **Amount (kg)** |
|---|---|
| Resinate (Erkazit 4400, Lawter) | 7.176 |
| Copolymer of example 3 | 13.65 |
| Toluene | 68.995 |
| Ethyl cellulose (Grade 300) | 0,516 |
| Calcium carbonate | 6,999 |
| Magnesium oxide | 0,034 |
| Bentonite | 1.84 |
| Micronised PE-Wax (< 20 µm) | 0,8 |
| Anti-foaming agent | 0,024 |

### Comparative example 2

The same varnish as described in example 4 was prepared with the exception that instead of the copolymer of example 2 a phenolic-modified rosin resin ester (Unik print 3342, United resins) was used.

### Example 5: Preparation of inks

A standard gravure ink was extended with the varnish according to example 4. The ratio of ink to extender was 2:1, resulting in the following formulations:

| | **Amount (kg)** | | |
|---|---|---|---|
| | Ex. 5a: Yellow ink | Ex. 5b: Magenta ink | Ex. 5c: Cyan ink |
| Pigment Yellow 12 | 9.385 | | |
| Pigment Red 57:1 | | 8.789 | |
| Pigment Blue 27 | | | 10.559 |
| Resinate (Erkazit 4400, Lawter) | 20.783 | 22.545 | 21.141 |
| Copolymer of example 3 | 4.521 | 4.523 | 4.522 |
| Phenolic modified rosin resin ester (Unik Print 3342, United Resins) | 3.161 | 3.263 | 4.851 |
| Ethyl cellulose (Grade 300) | 0.171 | 0.171 | 0.171 |
| Calcium carbonate | 3.767 | 4.048 | 3.892 |
| Bentonite | 0.692 | 0.686 | 0.655 |
| Micronised PE-Wax (< 20 µm) | 0.530 | 0.533 | 0.530 |
| Anti-foaming agent | 0.047 | 0.034 | 0.044 |
| Toluene | 56.943 | 55.408 | 53.635 |

### Comparative Example 3: Preparation of inks

A standard gravure ink was extended with the varnish according to comparative example 2. The ratio of ink to extender was 2:1, resulting in the following formulations:

| | **Amount (kg)** | | |
|---|---|---|---|
| | C.Ex. 3a: Yellow ink | C.Ex. 3b: Magenta ink | C.Ex. 3c: Cyan ink |
| Pigment Yellow 12 | 9.385 | | |
| Pigment Red 57:1 | | 8.789 | |
| Pigment Blue 27 | | | 10.559 |
| Resinate (Erkazit 4400, Lawter) | 20.783 | 22.545 | 21.141 |
| Phenolic modified rosin resin ester (Unik Print 3342, United Resins) | 7.681 | 7.787 | 9.373 |
| Ethyl cellulose (Grade 300) | 0.171 | 0.171 | 0.171 |
| Calcium carbonate | 3.767 | 4.048 | 3.892 |
| Bentonite | 0.692 | 0.686 | 0.655 |
| Micronised PE-Wax (< 20 µm) | 0.530 | 0.533 | 0.530 |
| Anti-foaming agent | 0.047 | 0.034 | 0.044 |
| Toluene | 56.943 | 55.408 | 53.635 |

### Measurement of viscosity

The viscosity of the varnishes of example 2 and comparative example 1 was determined using a 4 mm DIN cup and determining the efflux time at room temperature (20°C).

For the varnish of example 2, a viscosity of 8 s was measured, whereas for the varnish of comparative example 1 a viscosity of 11 s was measured.

### Separation behaviour

The separation behaviour of the varnishes of example 2 and comparative example 1 was determined as follows: The varnishes were left standing in a cup at 20°C for 3 days. The varnish according to example 2 showed less separation of solvent and varnish, whereas in the case of the varnish according to comparative example 1 a higher amount of solvent floated on the surface.

### Measurement of dilution rate

The dilution rate determines the amount of solvent (toluene), which has to be added to an ink or extender to achieve a well-defined viscosity at room temperature (20°C), e.g. efflux time of 30 s in a GS-Cup (3 mm orifice). The dilution rate is given as % toluene. For example, a dilution rate of an extender of 120% means that 120 g of toluene have to be added to 100 g of extender to achieve the defined viscosity of 30 s.

For the varnish according to example 4, a dilution rate of 162% was measured, whereas for the varnish of comparative example 2 a dilution rate of 130% was measured.

Thus, the system containing the copolymer of the present invention is much more efficient in terms of costs as more toluene is added to reach print viscosity.

### Measurement of drying time

Printed products have to dry rapidly in order to prevent stickiness during the finishing process. The drying time is utilized as a parameter for the drying speed.

To measure the drying time, a print-out was prepared as follows: The ink according to example 5 or comparative example 3 was diluted to the desired viscosity, as described above in the dilution rate test, and printed on LWC paper using a plate press printing machine. The resulting print-out was pressed against blank paper under defined conditions. The drying time is the time passed until the print-out does not stick to the blank paper anymore.

The results of the measurement of drying time are shown in the table below:

| | **drying time Yellow ink** | **drying time Magenta ink** | **drying time Cyan ink** |
|---|---|---|---|
| Example 5a | 25,4 s | | |
| Comparative Example 3a | 26,6 s | | |
| Example 5b | | 24,6 s | |
| Comparative Example 3b | | 25,5 s | |
| Example 5c | | | 24,4 s |
| Comparative Example 3c | | | 25,6 s |

In all cases, the inks comprising the copolymer of the present invention exhibited a shorter drying time, i.e. they dried more rapidly.

## Claims

1. Composition for the publication gravure printing, comprising toluene as organic solvent, and as one binder component a copolymer which is the reaction product of 95-50 wt.-% styrene or α-methyl styrene, 5-20 wt.-% of a monomer selected from the group consisting of a tertiary-amine containing (meth)acrylate and acrylic acid, and 0.5-40 wt.-% of a compound comprising at least 2 ethylenic unsaturated moieties, wherein the sum of all indicated percentages is 100%.

2. Composition according to claim 1, **characterized in that** the compound comprising at least 2 ethylenic unsaturated moieties is a poly(meth)acrylate, preferably a di(meth)-acrylate.

3. Composition according to claim 1 or 2, **characterized in that** said copolymer is the reaction product of styrene, 2-(dimethylamino)ethylmethacrylate, and a compound selected from the group consisting of hexanediol diacrylate, divinylbenzene, dipropyleneglycol diacrylate and tripropyleneglycol diacrylate.

4. Composition according to any one of claims 1 to 3, **characterized in that** said copolymer is the reaction product of styrene, acrylic acid, and a compound selected from the group consisting of hexanediol diacrylate, divinylbenzene, dipropyleneglycol diacrylate and tripropyleneglycol diacrylate.

5. Composition according to any one of claims 1 to 4, **characterized in that** the composition comprises as a further binder component a resinate in an amount which is below the amount of said copolymer binder component.

6. Composition according to any one of claims 1 to 5, **characterized in that** the composition further comprises a colorant, preferably a pigment predispersed in a liquid resinate medium.

7. Composition according to any one of claims 1 to 6, **characterized in that** the composition further comprises additives such as a thickener, a filler, or a wax.

8. Use of a copolymer which is the reaction product of 95-50 wt.-% styrene or α-methyl styrene, 5-20 wt.-% of a monomer selected from the group consisting of a tertiary-amine containing (meth)acrylate and acrylic acid, and 0.5-40 wt.-% of a compound comprising at least 2 ethylenic unsaturated moieties, wherein the sum of all indicated percentages is 100%, as a binder component in a publication gravure printing ink.

9. Use according to claim 8, **characterized in that** said copolymer is the reaction product of styrene, 2-(dimethylamino)ethylmethacrylate, and a compound selected from the group consisting of Hexanediol diacrylate, Divinylbenzene, dipropyleneglycol diacrylate and tripropyleneglycol diacrylate.

10. Use according to claim 8, **characterized in that** said copolymer is the reaction product of styrene, acrylic acid, and a compound selected from the group consisting of Hexanediol diacrylate, Divinylbenzene, dipropyleneglycol diacrylate and tripropyleneglycol diacrylate.

11. Process of printing a product in a publication gravure printing process, comprising the step of printing at least a part of the surface of a substrate with a composition according to any one of claims 1 to 7.

## Patentansprüche

1. Zusammensetzung für den Illustrationstiefdruck, umfassend Toluol als organisches Lösungsmittel und als eine Bindemittelkomponente ein Copolymer, bei dem es sich um das Reaktionsprodukt von 95-50 Gew.-% Styrol oder α-Methylstyrol, 5-20 Gew.-% eines Monomers aus der Gruppe bestehend aus einem ein tertiäres Amin enthaltenden (Meth)acrylat und Acrylsäure und 0,5-40 Gew.-% einer Verbindung mit mindestens 2 ethylenisch ungesättigten Gruppierungen, wobei die Summe aller angegebenen Prozentsätze 100% beträgt, handelt.

2. Zusammensetzung nach Anspruch 1, **dadurch gekennzeichnet, dass** es sich bei der Verbindung mit mindestens 2 ethylenisch ungesättigten Gruppierungen um ein Poly(meth)acrylat, vorzugsweise ein Di(meth)acrylat, handelt.

3. Zusammensetzung nach Anspruch 1 oder 2, **dadurch gekennzeichnet, dass** es sich bei dem Copolymer um das Reaktionsprodukt von Styrol, 2-(Dimethyl-amino)ethylmethacrylat und einer Verbindung aus der Gruppe bestehend aus Hexandioldiacrylat, Divinylbenzol, Dipropylenglykoldiacrylat und Tripropylenglykoldiacrylat handelt.

4. Zusammensetzung nach einem der Ansprüche 1 bis 3, **dadurch gekennzeichnet, dass** es sich bei dem Copolymer um das Reaktionsprodukt von Styrol, Acrylsäure und einer Verbindung aus der Gruppe bestehend aus Hexandioldiacrylat, Divinylbenzol, Dipropylenglykoldiacrylat und Tripropylenglykoldiacrylat handelt.

5. Zusammensetzung nach einem der Ansprüche 1 bis 4, **dadurch gekennzeichnet, dass** die Zusammensetzung als weitere Bindemittelkomponente ein Resinat in einer Menge, die unter der Menge der Copolymer-Bindemittelkomponente liegt, umfasst.

6. Zusammensetzung nach einem der Ansprüche 1 bis 5, **dadurch gekennzeichnet, dass** die Zusammensetzung ferner einen Farbstoff, vorzugsweise ein in einem flüssigen Resinatmedium vordispergiertes Pigment, umfasst.

7. Zusammensetzung nach einem der Ansprüche 1 bis 6, **dadurch gekennzeichnet, dass** die Zusammensetzung ferner Additive wie einen Verdicker, einen Füllstoff oder ein Wachs umfasst.

8. Verwendung eines Copolymers, bei dem es sich um das Reaktionsprodukt von 95-50 Gew.-% Styrol oder α-Methylstyrol, 5-20 Gew.-% eines Monomers aus der Gruppe bestehend aus einem ein tertiäres Amin enthaltenden (Meth)acrylat und Acrylsäure und 0,5-40 Gew.-% einer Verbindung mit mindestens 2 ethylenisch ungesättigten Gruppierungen, wobei die Summe aller angegebenen Prozentsätze 100% beträgt, handelt, als Bindemittelkomponente in einer Illustrationstiefdruckfarbe.

9. Verwendung nach Anspruch 8, **dadurch gekennzeichnet, dass** es sich bei dem Copolymer um das Reaktionsprodukt von Styrol, 2-(Dimethylamino)-ethylmethacrylat und einer Verbindung aus der Gruppe bestehend aus Hexandioldiacrylat, Divinylbenzol, Dipropylenglykoldiacrylat und Tripropylenglykoldiacrylat handelt.

10. Verwendung nach Anspruch 8, **dadurch gekennzeichnet, dass** es sich bei dem Copolymer um das Reaktionsprodukt von Styrol, Acrylsäure und einer Verbindung aus der Gruppe bestehend aus Hexandioldiacrylat, Divinylbenzol, Dipropylenglykoldiacrylat und Tripropylenglykoldiacrylat handelt.

11. Verfahren zum Bedrucken eines Produkts in einem Illustrationtiefdruckverfahren, bei dem man mindestens einen Teil der Oberfläche eines Substrats- mit einer Zusammensetzung nach einem der Ansprüche 1 bis 7 bedruckt.

## Revendications

1. Composition pour l'héliogravure de publications, comprenant du toluène comme solvant organique, et comme constituant liant un copolymère qui est le produit de réaction de 95-50 % en poids de styrène ou d'α-méthyl-styrène, 5-20 % en poids d'un monomère choisi dans le groupe constitué par un (méth)acrylate contenant une amine tertiaire et l'acide acrylique, et 0,5-40 % en poids d'un composé comprenant au moins 2 groupements éthyléniques insaturés, la somme tous les pourcentages indiqués faisant 100 %.

2. Composition selon la revendication 1, **caractérisée en ce que** le composé comprenant au moins 2 groupements éthyléniques insaturés est un poly(méth)acrylate, de préférence un di(méth)acrylate.

3. Composition selon la revendication 1 ou 2, **caractérisée en ce que** ledit copolymère est le produit de réaction de styrène, de méthacrylate de 2-(diméthyl-amino)éthyle, et d'un composé choisi dans le groupe constitué par le diacrylate d'hexanediol, le divinylbenzène, le diacrylate de dipropylène glycol et le diacrylate de tripropylène glycol.

4. Composition selon l'une quelconque des revendications 1 à 3, **caractérisée en ce que** ledit copolymère est le produit de réaction de styrène, d'acide acrylique, et d'un composé choisi dans le groupe constitué par le diacrylate d'hexanediol, le divinylbenzène, le diacrylate de dipropylène glycol et le diacrylate de tripropylène glycol.

5. Composition selon l'une quelconque des revendications 1 à 4, **caractérisée en ce que** la composition comprend comme autre constituant liant un résinate dans une quantité qui est inférieure à la quantité dudit constituant liant copolymère.

6. Composition selon l'une quelconque des revendications 1 à 5, **caractérisée en ce que** la composition comprend en outre un colorant, de préférence un pigment prédispersé dans un milieu de résinate liquide.

7. Composition selon l'une quelconque des revendications 1 à 6, **caractérisée en ce que** la composition comprend en outre des additifs tels qu'un épaississant, une charge, ou une cire.

8. Utilisation d'un copolymère qui est le produit de réaction de 95-50 % en poids de styrène ou d'α-méthyl-styrène, 5-20 % en poids d'un monomère choisi dans le groupe constitué par un (méth)acrylate contenant une amine tertiaire et l'acide acrylique, et 0,5-40 % en poids d'un composé comprenant au moins 2 groupements éthyléniques insaturés, la somme tous les pourcentages indiqués faisant 100 %, comme constituant liant dans une encre d'héliogravure de publications.

9. Utilisation selon la revendication 8, **caractérisée en ce que** ledit copolymère est le produit de réaction de styrène, de méthacrylate de 2-(diméthylamino)éthyle, et d'un composé choisi dans le groupe constitué par le diacrylate d'hexanediol, le divinylbenzène, le diacrylate de dipropylène glycol et le diacrylate de tripropylène glycol.

10. Utilisation selon la revendication 8, **caractérisée en ce que** ledit copolymère est le produit de réaction de styrène, d'acide acrylique, et d'un composé choisi dans le groupe constitué par le diacrylate d'hexanediol, le divinylbenzène, le diacrylate de dipropylène glycol et le diacrylate de tripropylène glycol.

11. Procédé d'impression d'un produit dans un procédé d'héliogravure de publications, comprenant l'étape d'impression d'au moins une partie de la surface d'un substrat avec une composition selon l'une quelconque des revendications 1 à 7.
